# EUROPEAN PATENT APPLICATION

(11) **EP 4 767 888 A1**
(43) Date of publication of application: **01.07.2026**
(21) Application number: 25167143.4
(22) Date of filing: 28.03.2025
(51) Int. Cl.: A47J 47/00, A47J 47/08, A47J 47/14, A45C 11/20

(54) **FOOD PREPARATION AND SERVING SYSTEM**

(30) Priority: 26.12.2024 US 202419001805
(71) Applicant: Lifetime Brands, Inc., Garden City, NY 11530 (US)
(72) Inventor: Seo, YoungJin, New York (US); Krent, Adam, New York (US)
(74) Representative: Forresters IP LLP

(57) **Abstract**

A food serving and preparation system is provided and includes a base bowl or container, a combined cutting board/serving board positioned within the bowl such that the same is flush with a top edge of the bowl/container. A cover is provided that operates to cover the bowl/container with or without the combined cutting board/serving board positioned within the bowl. Various locking mechanisms can be employed to secure the cover to the bowl/container with or without the combined cutting board/serving board in place.

## Description

### BACKGROUND

### Technical Field

The present invention relates to food preparation and serving. More particularly, it relates to food preparation and serving system including a bowl with a combined serving board/cutting board that fits into the top of the bowl and may include a cover.

### Description of the prior art

When it comes to the preparation and serving of food, it will be appreciated that the tools used for each are mutually exclusive of each other. Very often the food is prepared using cookware, and other food preparation utensils and once food prep is completed, the prepared food is moved to some separate form of serverware.

### SUMMARY OF THE INVENTION

The present invention provides a food preparation and serving system that combines the food preparation devices with the server ware, thus simplifying the and minimizing the need for separate preparation and serving devices. This and other aspects of the invention are achieved by a food preparation system having a base having a predetermined geometric shape, a bottom, side walls extending upward from the bottom and an open top with a top edge. A combined serving board and cutting board has a geometric shape similar to that of the base and having an edge. The combined serving board and cutting board is sized so as to at least partially nest into the open top of the base such that the edge of the combined serving board and cutting board at least partially rests within the open top of the base.

In accordance with other implementations, the food preparation and serving system includes a base bowl having a bottom, side walls extending upward from the bottom and an open top having a top edge and an inside upper circumferential edge. A combined serving board and cutting board has two sides, one side being a serving side having at least one compartment for receiving a food product, and the other side being a cutting board. The combined serving board and cutting board is sized and configured to be received into the open top and rest within the inside upper circumferential edge such that one of the serving side or cutting board side is flush with the top edge of the base bowl. A transparent cover is configured to be releasably attached to the base bowl. A locking mechanism connected to either the transparent cover or the base bowl is provided and is configured to selectively lock the transparent cover onto the base bowl.

Other aspects and features of the present principles will become apparent from the following detailed description considered in conjunction with the accompanying drawings. It is to be understood, however, that the drawings are designed solely for purposes of illustration and not as a definition of the limits of the present principles, for which reference should be made to the appended claims. It should be further understood that the drawings are not necessarily drawn to scale and that, unless otherwise indicated, they are merely intended to conceptually illustrate the structures and procedures described herein.

### BRIEF DESCRIPTION OF THE DRAWINGS

In the drawings wherein like reference numerals denote similar components throughout the views:
FIG. 1 shows a perspective view of the food preparation and serving system according to an embodiment of the invention;
FIG. 2A shows an exploded perspective view of the embodiment shown in FIG. 1;
FIG. 2B shows an exploded perspective view of the food preparation and serving system according another embodiment of the invention;
FIG. 2C shows an exploded perspective view of the food preparation and serving system according a further embodiment of the invention;
FIG. 2D shows an exploded perspective view of the food preparation and serving system according yet another embodiment of the invention;
FIG. 2E shows an exploded perspective view of the food preparation and serving system according another embodiment of the invention;
FIG. 2F shows an exploded perspective view of the food preparation and serving system according another embodiment of the invention;
FIG. 2G shows an exploded perspective view of the food preparation and serving system according another embodiment of the invention;
FIG. 2H shows an exploded perspective view of the food preparation and serving system according another embodiment of the invention;
FIGS. 3A-3E show plan views of alternative bowl shapes and configurations according to other embodiments of the invention;
FIGS. 4A-4G show top views of alternative cover shapes with their corresponding combined serving trays/cutting boards according to further embodiments of the invention;
FIGS 5A-5C show plan views of alternative cover designs for the food preparation and serving system, according to alternative embodiments of the invention;
FIGS. 6A-6F show plan views of alternative combined serving trays/cutting boards according to yet further embodiments of the invention;
FIGS. 7A-7E show cross-sectional views of alternative profiles for seating the combined serving tray/cutting board into the bowl, according to alternative embodiments of the invention;
FIGS. 8A-8H show different views of alternative cover handle implementations according to alternative embodiments of the invention; and
FIGS. 9A-9E show an alternative locking mechanism for locking the cover to the bowl, according to other embodiments of the invention.

### DETAILED DESCRIPTION

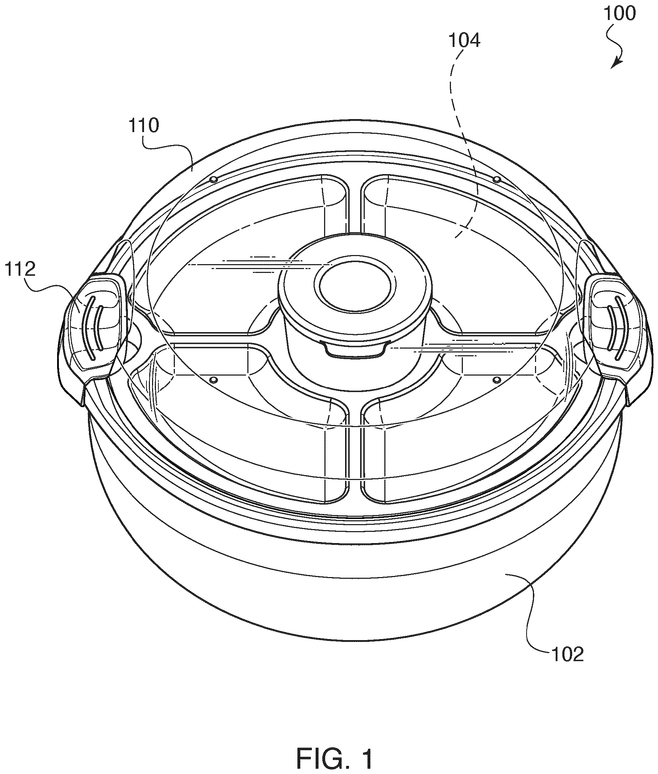

Referring to FIG. 1, there is shown the food preparation and serving system 100 according to one implementation of the present invention. The system 100 includes a bottom or base bowl 102, a combined serving board/cutting board 104 positioned in the opening of the bottom/base bowl 102 and a removable cover 110.

In the following embodiments, it is to be appreciated that the base or bowl 102 and the combined serving board/cutting board 104 can be made of any appropriate materials for food preparation and/or serving or any combinations thereof. This includes, but is not limited to wood, plastics, silicone, and/or any combinations of the same.

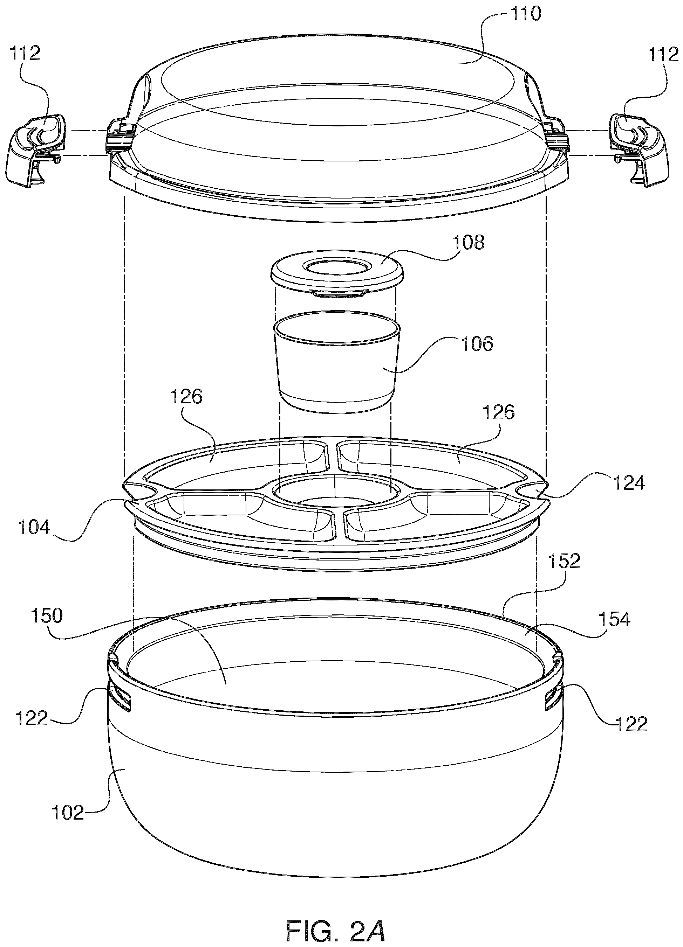

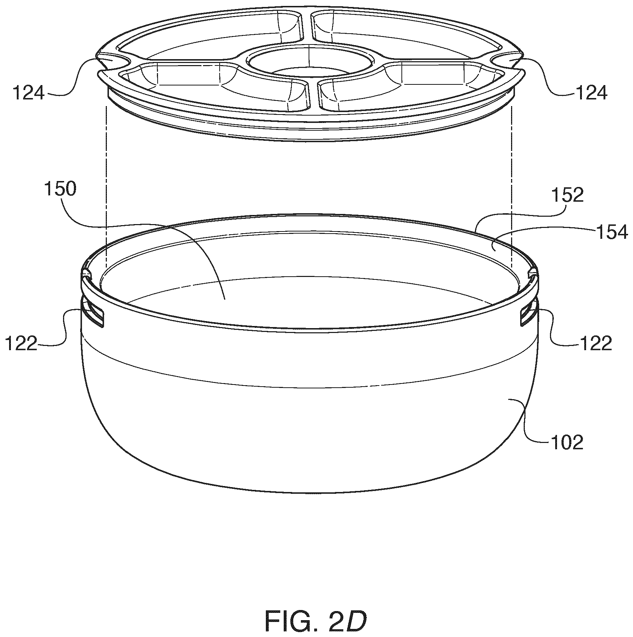

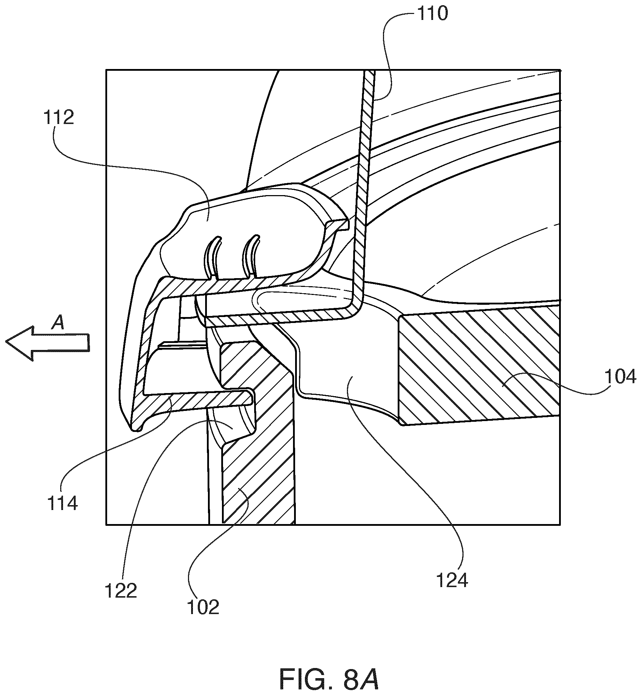

FIGS. 2A-2D shows some variations in the food preparation and serving system in accordance with alternative embodiments. FIG. 2A shows the bowl 102 with the combined serving board/cutting board 104 having a plurality of compartments or depressions that operate as compartments 126 of various sizes and shapes for the serving of food products. In this implementation, the bowl 102 has an opening 150, an upper perimeter edge 152, and an angled surface 154 immediately adjacent the upper edge. As will be described in more detail below, the board 104 nests inside the upper most portion of the bowl as defined by the angled surface 154 and corresponding angled surface on the edge of the board 104 (described in more detail below) such that the board 104 sits flush with the opening and the upper perimeter edge 152 of the bowl. At least one opening or recess 124 is provided on the edge of the board 104 that assists in the removal of the board 104 from a nested position in the bowl opening 150. In this embodiment a container 106 with a cover 108 can be positioned in the central compartment. A cover 110 is provided with locking handles 112 configured to engage the openings 122 in the upper sides or outer rim 152 of the bowl 102. The details of the locking handles 112 and alternative arrangements of the same will be discussed below in reference to FIGS. 8A-8G. In this configuration, the container 106 with cover 108 fits in the central compartment 126 and the cover 110 locks in over the same, thus securing the entire food preparation/serving system for safe movement/travel.

In another alternative configuration, the base or bowl 102 can be configured to receive one or more boards 104 such that they do not necessarily sit flush with the upper edge or rim of the bowl.

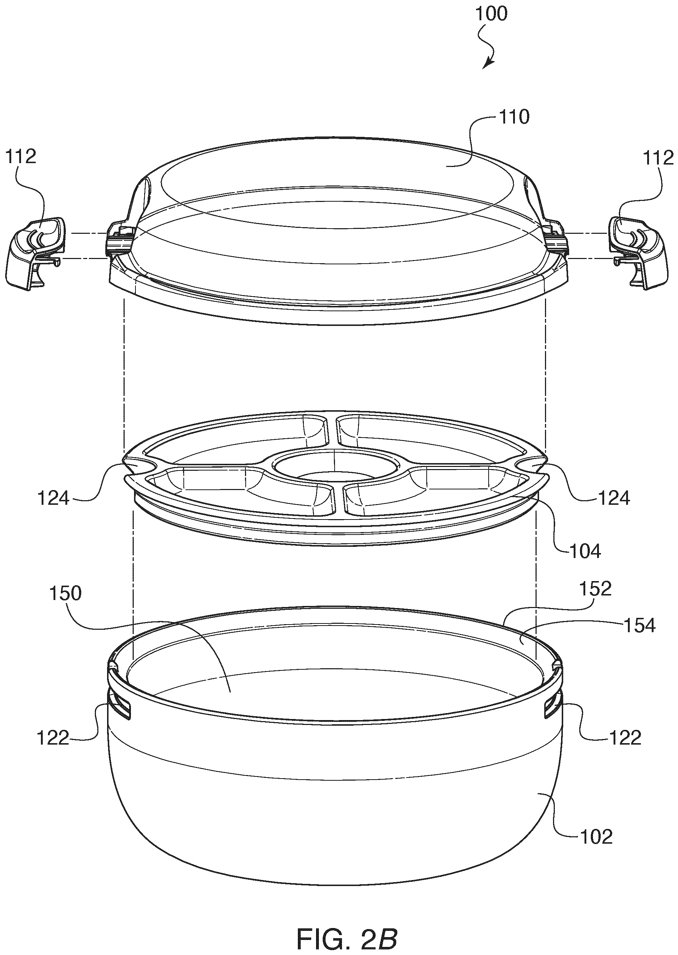

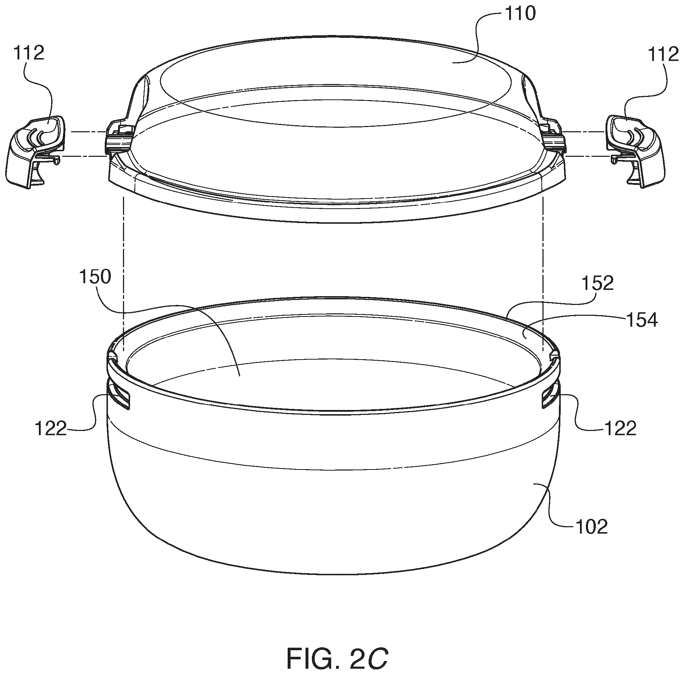

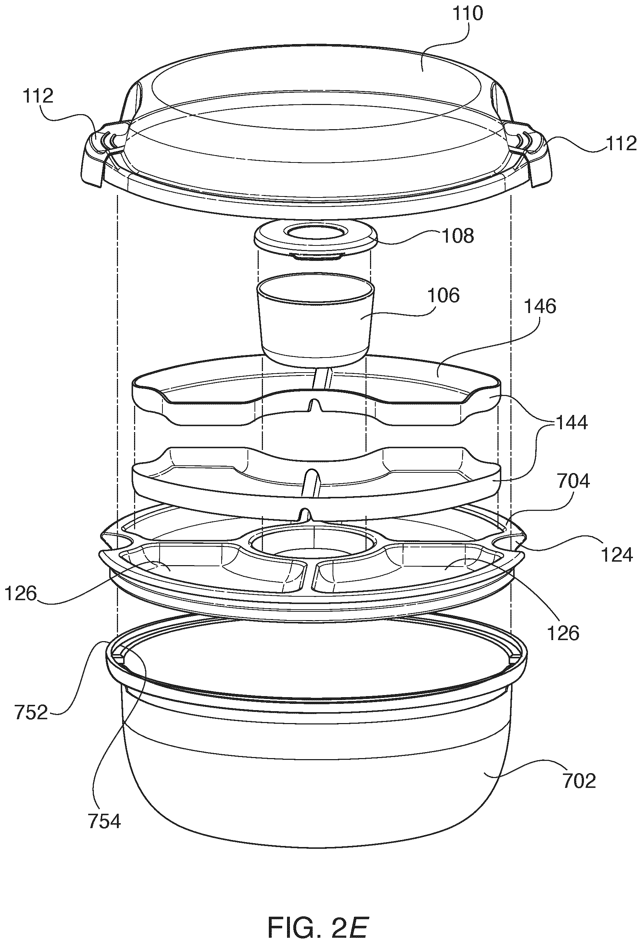

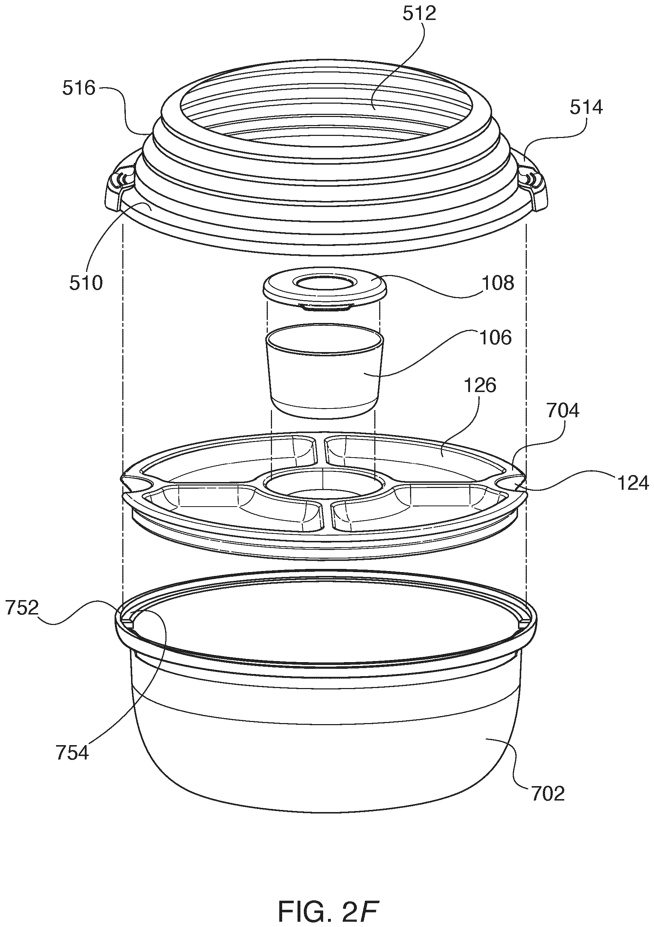

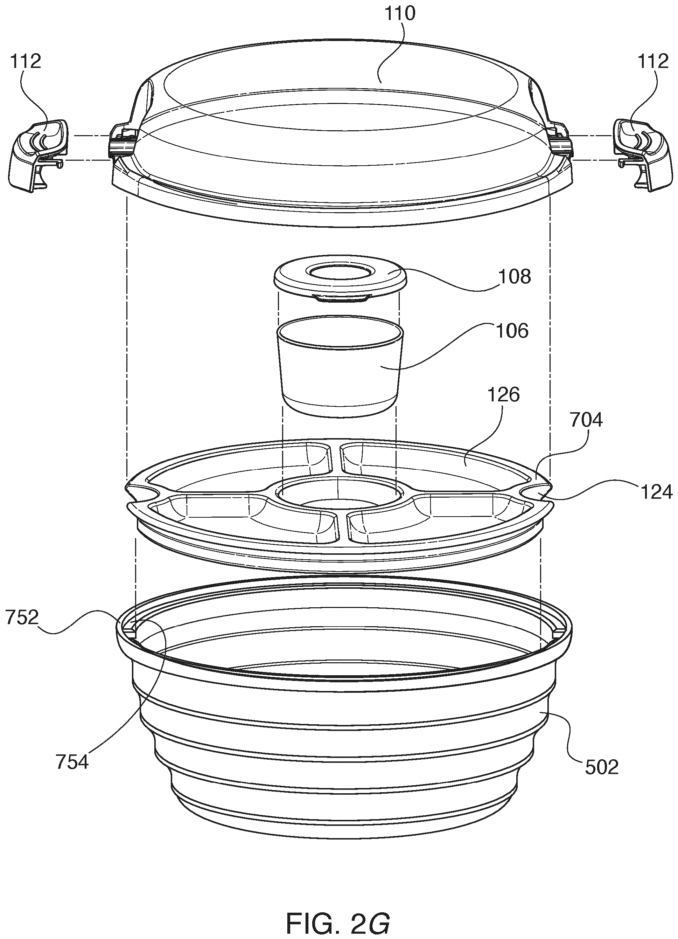

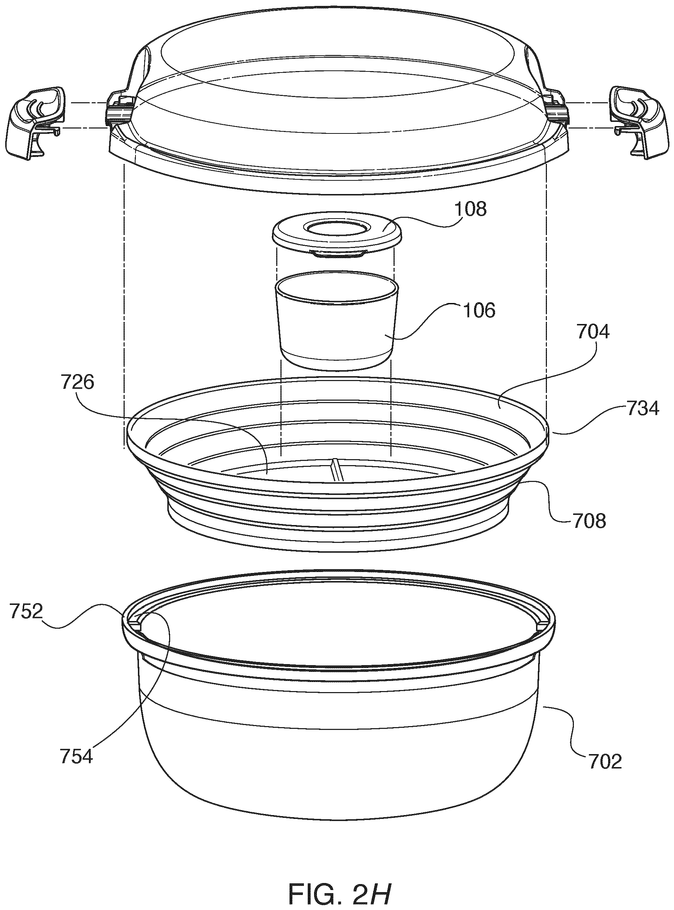

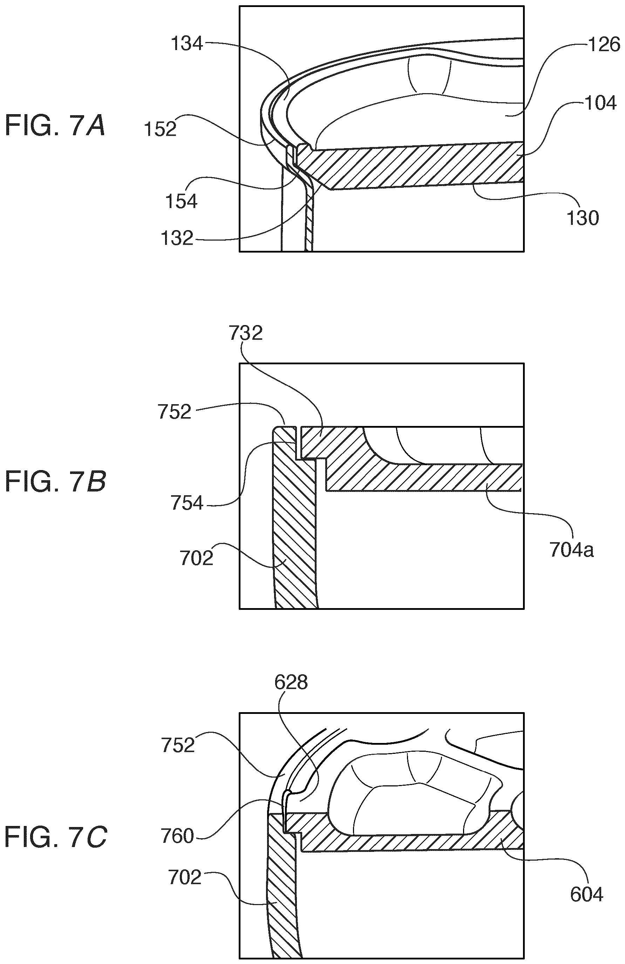

FIG. 2B shows an alternative embodiment of the system 100 without the container 106 and corresponding cover. FIG. 2C shows the system 100 without the combined serving/cutting board 104. FIG .2D shows the system 100 with just the bowl 102 and the combined serving/cutting board 104. The manner in which the combined serving/cutting board 104 rests or nests into the top of the bowl 102 will be described below with reference to FIGS. 7A-7E. FIG. 2E shows and alternative implementation of the system 100 where the other serving trays 144 are added that can fit over the combined serving/cutting board 704. FIG. 2F shows an alternative implementation of the system 100 where the cover 510 is a collapsible cover having an outer edge 514, a collapsible body 516 and a transparent top 512. FIG. 2G shows another alternative implementation of the system 100 where the bowl 502 is collapsible. FIG. 2H shows yet a further alternative implementation of the system 100 where the combined serving/cutting board 704 has a collapsible body 708, with compartments 726 positioned at the bottom thereof.

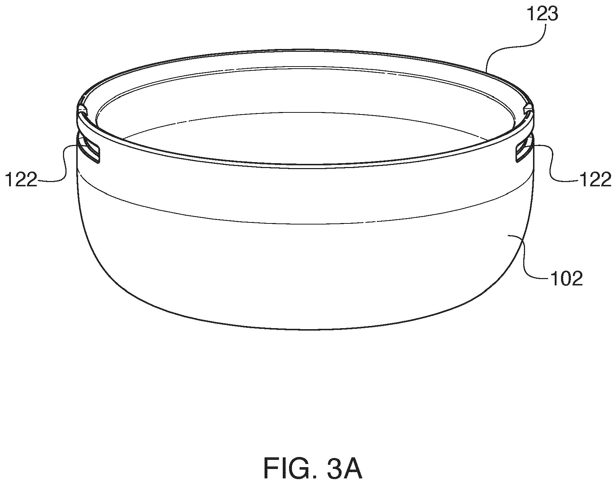

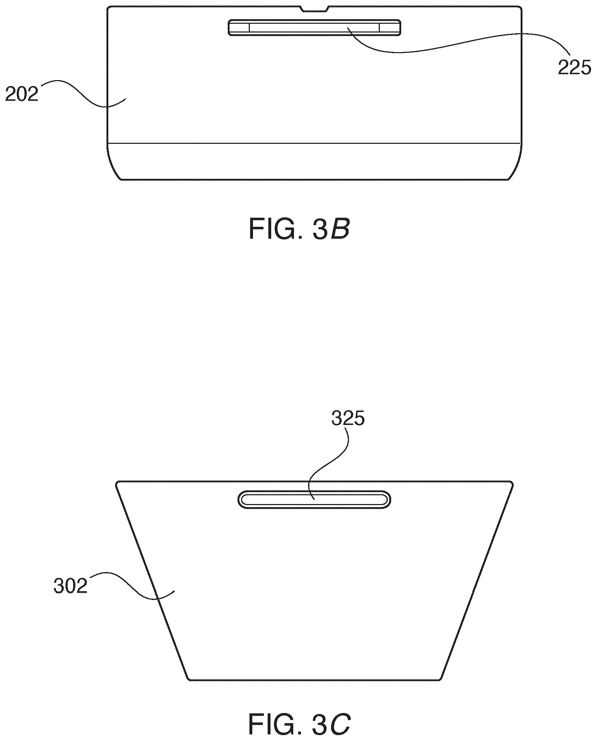

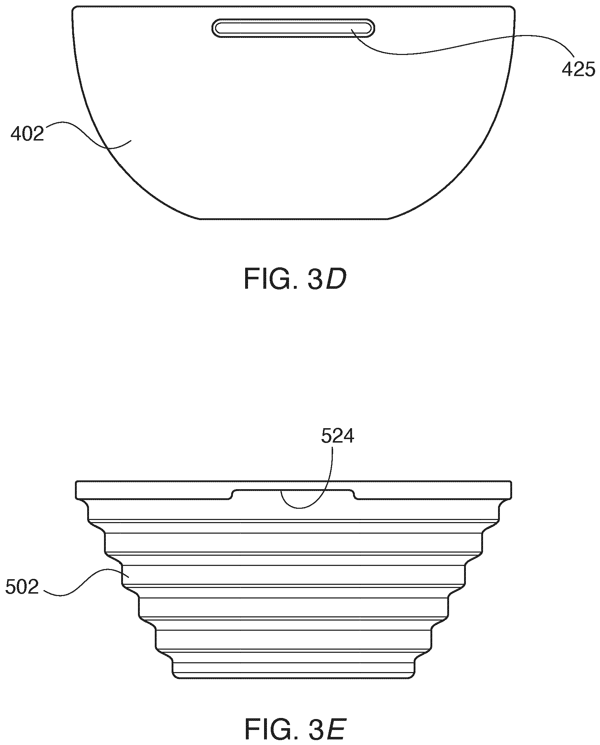

FIGS. 3A-3F show side views of various different geometric configurations of the base bowl 102 according to other contemplated implementations of the invention. FIG. 3A shows a cylindrical shape with large rounded bottom bowl 102 according to primary example of this disclosure. This embodiment shows the openings or recesses 124 in the sides for receiving and locking the handles of the cover. FIG. 3B shows cylindrically shaped bowl/base 202 with the openings or recesses 224 for receiving the locking handles of the cover. FIG. 3C shows upside down cone shape or frusto-conical shaped base/bowl 302 having the openings or recesses 324 for receiving the locking handles of the cover. FIG. 3D shows a round bowl shape for the base/bowl 402, also having the openings or recesses 424 for receiving the locking handles of the cover. FIG. 3E shows a collapsible base/bowl 502 having a notch 524 configured to receive the locking handles of the cover.

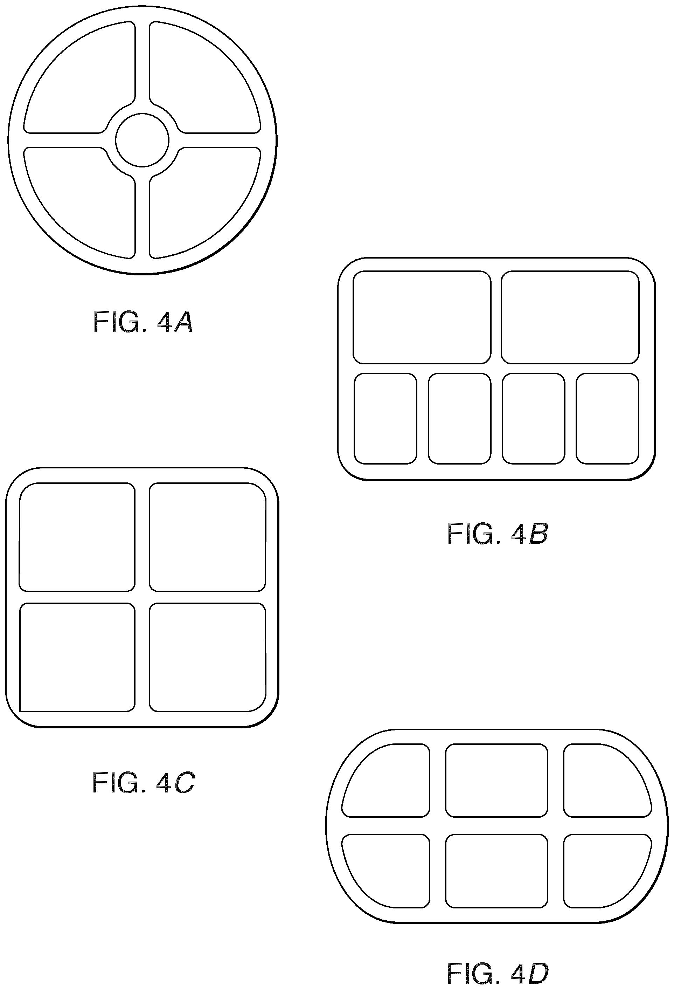

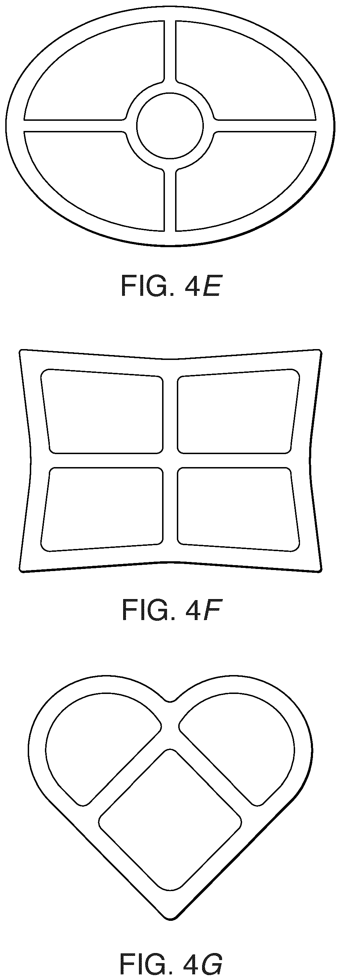

FIGS. 4A-4G show a wide array of different geometric shapes for the cover 112 and underlying combined serving/cutting boards 104 and bowls 102. As will be appreciated by the foregoing, many different geometric shapes can be implemented without departing from the scope and spirit of the present invention.

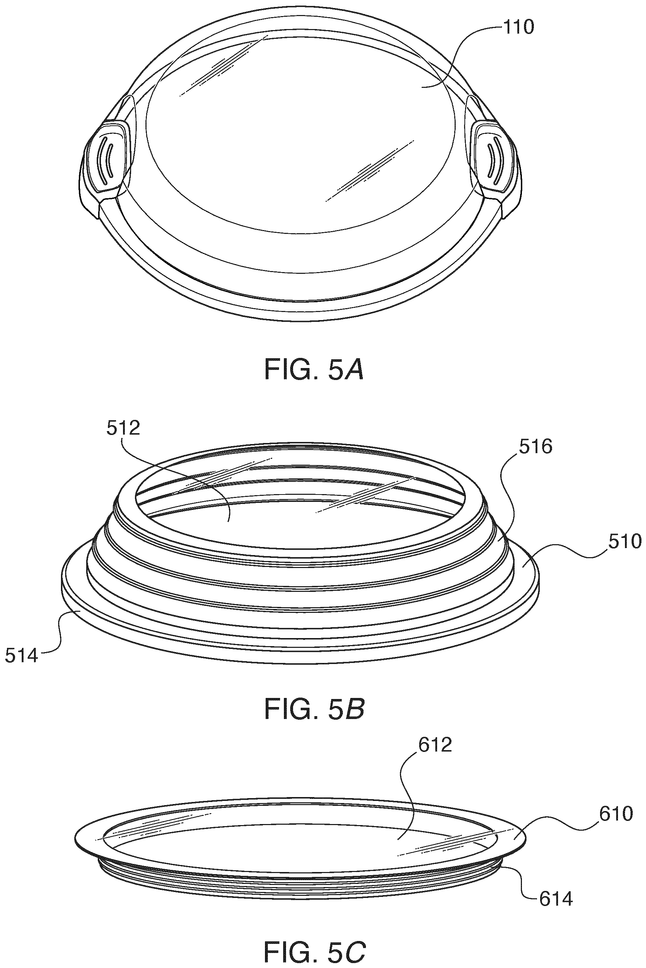

FIGS. 5A-5C show different forms that the cover can take. FIG. 5A shows a cover 110 primarily made of a transparent material. FIG. 5B shows cover 510 that is collapsible and includes a transparent top 512 that is connected to an outer or wide base portion 514 by an accordion like collapsible structure 516. Those of skill in the art will appreciate that the collapsible structure 516 can be made of, for example, silicone. FIG. 5C shows another cover 610 that has a transparent top surface 612, and a lower press fit ring 614 configured to fit into, for example, the opening of the bowl without the combined serving/cutting board.

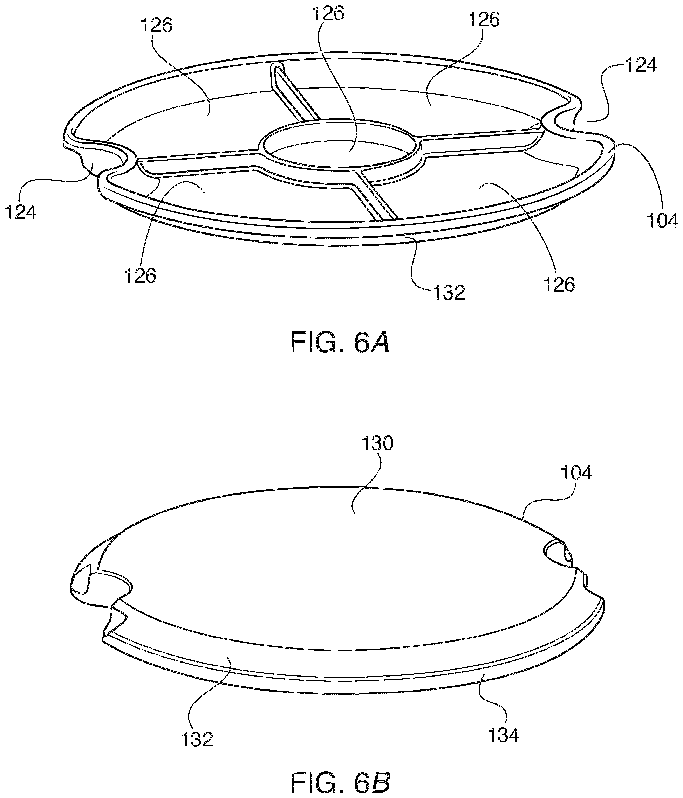

FIGS. 6A and 6B show the top and bottom view of an exemplary combined serving board and cutting board 104 according to one embodiment. On the upper side (FIG. 6A), the board 104 includes a variety of compartments or depressions 126 configured to receive food items to be served. The board 104 can include one or more openings, recesses or cutouts 124 that enable the user to easily remove the board 104 from a nested position in the top of the bowl. The underside of the board 130 (FIG. 6B) is a flat surface configured as a cutting surface for food preparation. As will be described in further detail below, the board 104 has an angled surface 132 extending from the outer rim 134 toward the cutting surface 130. This angled surface 132 us configured such that the board rests or better stated nests within the bowl along the top thereof, without falling into the bowl.

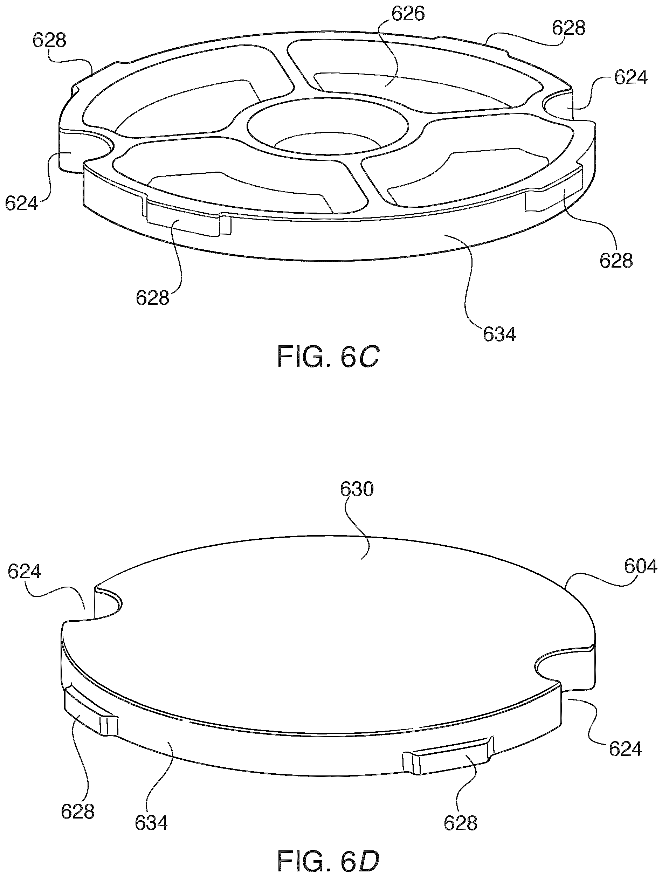

FIGS. 6C and 6D show an alternative implementation or embodiment of the combined serving/cutting board 640. One or more cutouts 624 is provided to assist the user in removing the board 640 from its nested position within the bowl. Further, in this implementation, the outer rim 624 of the board is straight and includes one or more protrusions 628 positioned around the same. These protrusions are configured to be received into corresponding notches in or within the upper edge of the bowl (See FIG. 7C) such that the board 640 sits flush with the top end of the bowl, and the compartments 626 are facing upward.

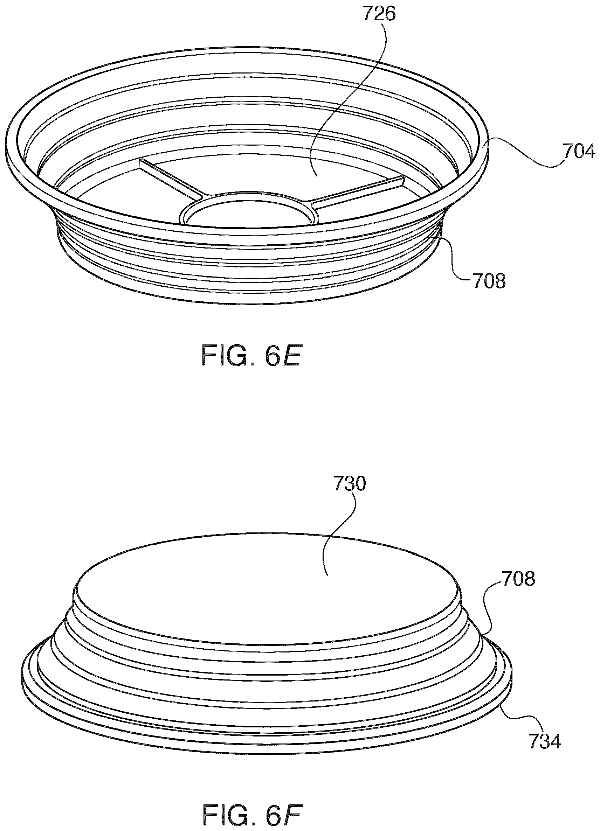

FIGS. 6E and 6F show another alternative cover 704 according to yet another embodiment. This cover 704 is collapsible having the accordion like edge 70 connecting the rim 734 to the base or on the underside cutting board 730 or on the upper side to reveal compartments 726.

FIGS. 7A-7E show various implementations of how the board nests/rests within the upper opening of the bowl without falling into the same. Referring to FIG. 7A, the board 104 has an angled surface 132 that is the same angle as the angled surface 154 immediately adjacent the upper edge 152 of the bowl. As shown, the board 104 simply drops into the opening of the bowl and fits perfectly within the bowl opening and through angled surfaces 132 and 154, the board 104 sits flush with the top edge 152 of the bowl.

FIG. 7B shows an alternative embodiment where the board 704 includes a stepped portion 732 around the entire perimeter of the board, and the bowl 702 includes a corresponding notch 754 that receives the board 704 such that it is flush with the top edge 752.

FIG. 7C shows another alternative embodiment corresponding to the board shown and described in FIGS. 6C-6D. In this implementation, the bowl 702 includes one or more notches 760 in the top edge such that the protrusions 628 on the edge of the board 604 align with and drop into the notches 760 as shown.

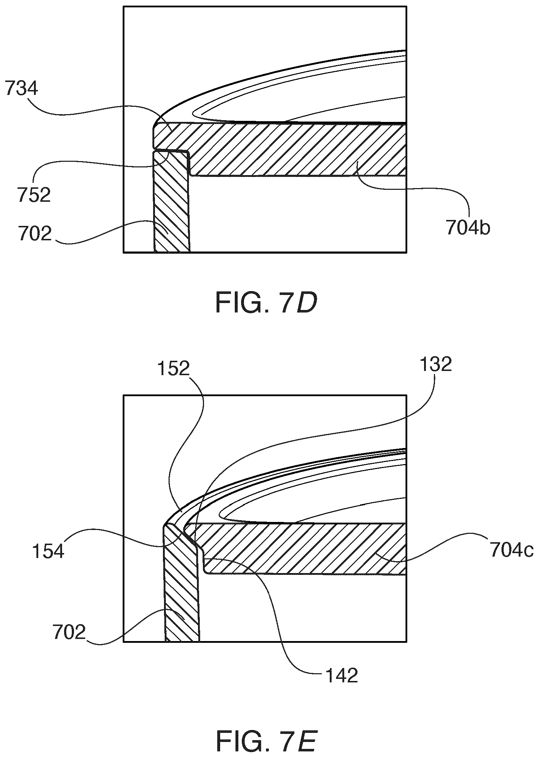

FIG. 7D shows yet another embodiment where the board 704B includes an outer edge or rim 734 that is notched such that it rests on the top edge 752 of the bowl 702.

FIG. 7E shows a further embodiment where the angled edge 132 of the board is smaller than that shown in FIG. 7A, and a portion of the board 142 on the cutting board side is further recessed into the bowl between the side walls of the same.

FIGS. 8A-8H show various embodiments of mechanisms for locking the cover 110 to the bowl 102 with the board 104 positioned in the top of the bowl.

FIG. 8A shows one implementation of a slide in lock where the handle 112 has a lower portion 114 that is configured to engage the opening or recess 122 in the exterior side of the bowl wall when pushed inward into the same. To release, the handle 112 slides outward in the direction of arrow A to release the lower portion 114 from the opening or recess 122.

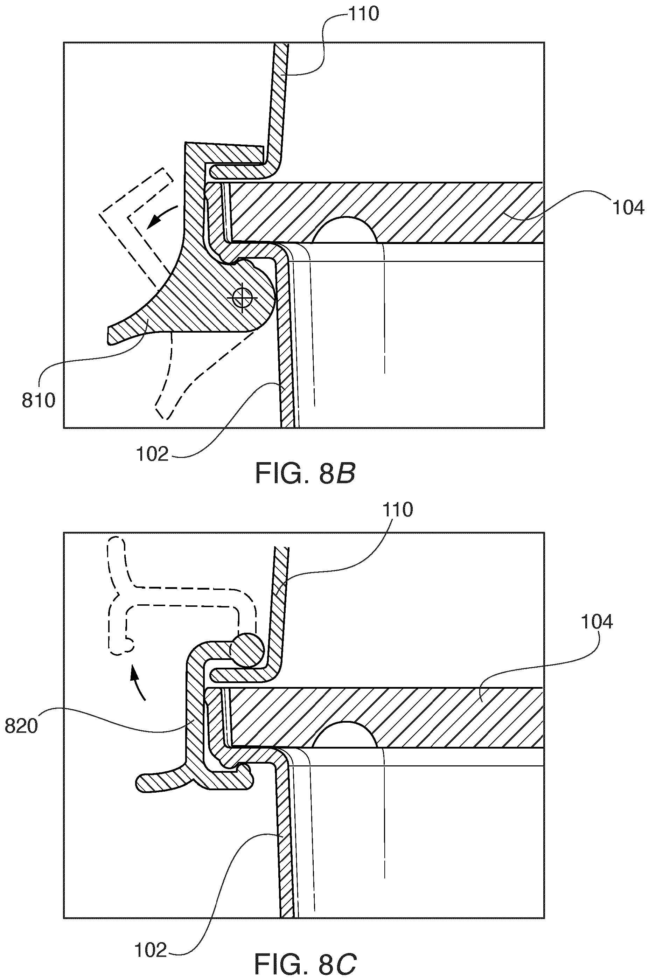

FIG. 8B shows a latch style clip 810 that is pivotally attached to the bowl 102 and pivots upward to engage the lower edge of the cover 110 and thereby secure the cover to the bowl.

FIG. 8C shows a clip on style mechanism where the clip 820 could be attached to the bowl 102 and cover 110 as shown, but not pivotally attached to either in any permanent or semi-permanent manner.

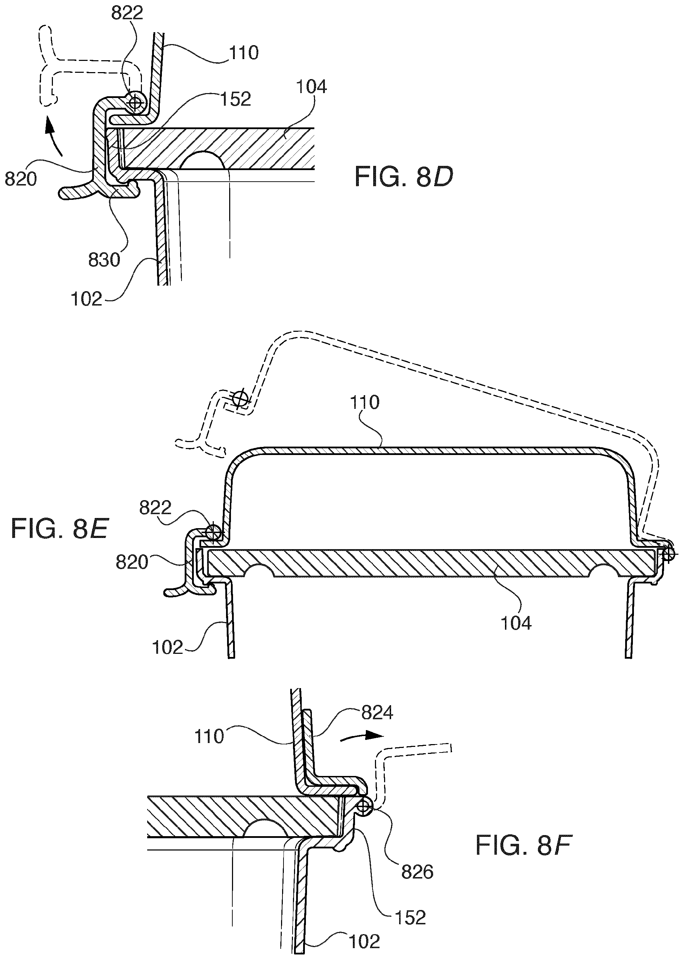

FIGS. 8D and 8E show a pivotable clip style mechanism where the clip 820 is pivotally attached to the cover 110 at a point 822 on the same. In this manner, a lower leg or portion 830 "clicks" around and under the bowl rim 152 and snaps using detents, depressions and protrusions, or any other known manner to lock the clip 820 to the bowl rim.

FIG 8F shows another hinge style clip 824 that is pivotally connected 826 to the rim 152 of the bowl. This hinge style clip does not have to lock and can simply be used as a carry point where a user's hand would hold the clip in the position shown over the cover 110 and board 104. A simple pivoting movement in the direction of the arrow would release the cover and board.

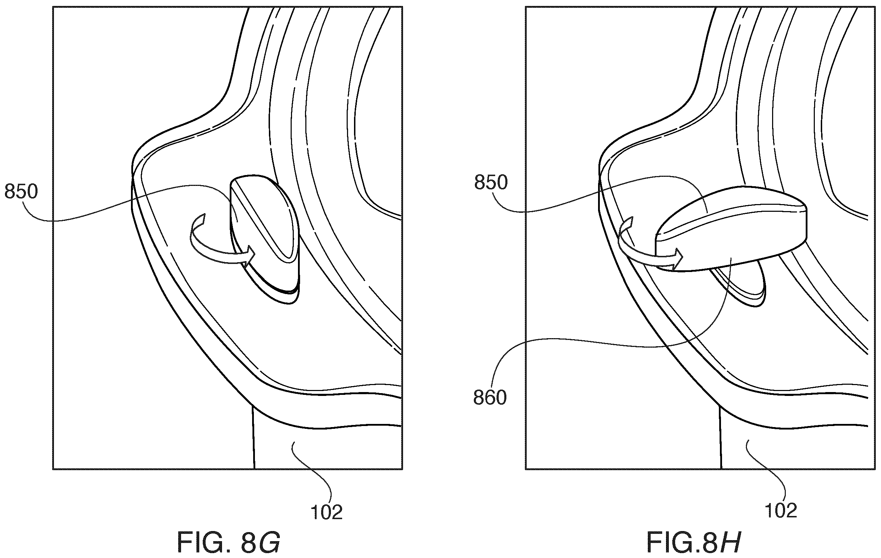

FIGS. 8G and 8H show a knob lock style mechanism for securing the lid to the bowl. In one configuration, the knob 850 is permanently affixed to the bowl, and the cover 110 has an opening 860 in the same to receive the knob 850. When the cover is positioned over the knob as shown, a 90 degree rotation of the knob operates to lock the lid to the bowl as shown in FIG. 8H. It will be appreciated that although described with the knob disposed on the bowl, other implementation where the knob and corresponding locking mechanism is attached to the cover, and the bowl has a receiving hole that receives a locking pawl or the like that when rotated with the knob, operates to lock the lid to the bowl.

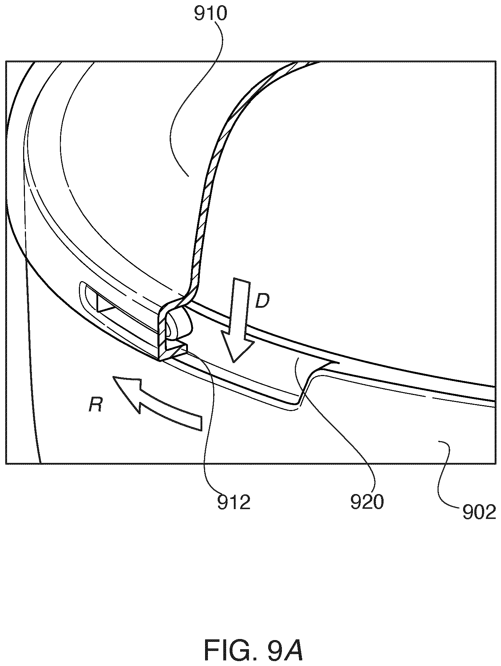

FIGS. 9A - 9E shown several other contemplated embodiments for locking the cover to the bowl, in accordance with the present invention.

FIG. 9A shows an embodiment where the bowl 902 has a slot 920 and the cover 910 has a portion 912 configured to fit into an L shaped slot 920 (or in this case a reversed L-shape) and be "dropped" down into the same as indicated by arrow D, and then the cover 910 is slightly rotated in the direction R such that the portion 912 secures into the slot 920. Simply rotating in the opposite direction and lifting action removes the cover from the locked position on the bowl.

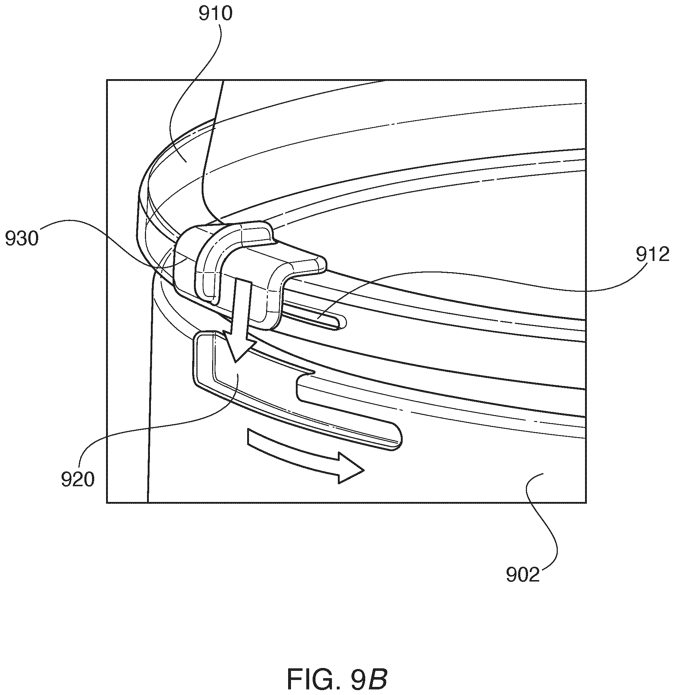

FIG. 9B shows another embodiment of a slide and lock mechanism to lock the cover 910 to the bowl 902. A sliding knob 930 is positioned within a slot 912 in the edge of the cover such that the cover is dropped downward into the L-shaped slot 920, once positioned in the slot, the knob 930 is slid horizontally to lock the cover onto the bowl.

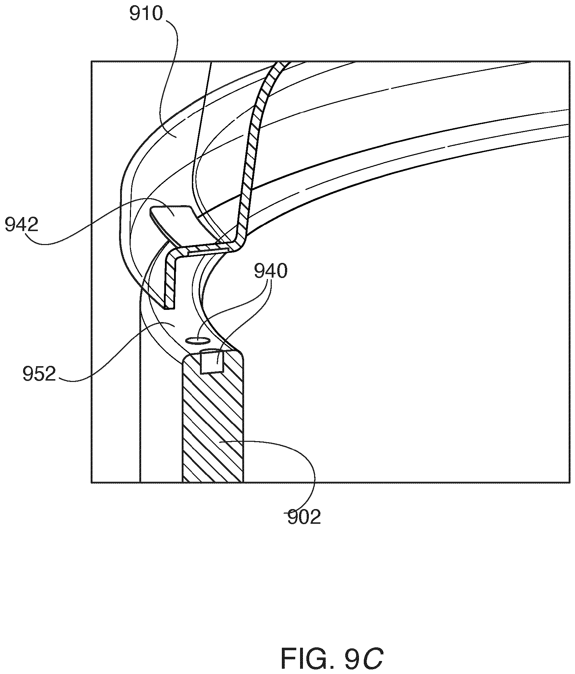

FIG. 9C shows another embodiment for securing the cover 910 to the bowl 902 using magnets. One or more magnets 940 can be disposed in the upper edge 952 of the bowl 902, and one or more magnets (of opposite pole) are positioned on the edge of the cover 910. Simple placement of the cover over the bowl will cause the magnets to engage and secure the cover to the bowl.

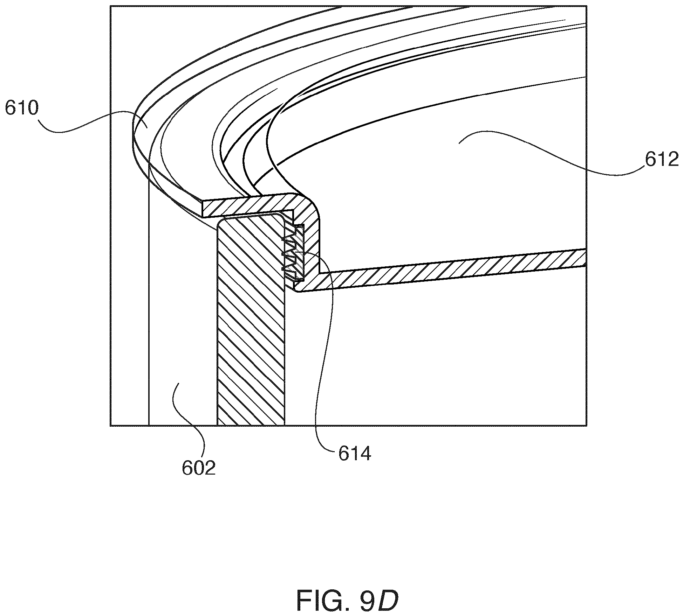

FIG. 9D shows another embodiment for securing the cover 610 to the bowl 602 using a gasket 614. As shown in the cover of FIG. 5C, a gasket 614 is positioned around the cover, and the cover is sized such that the gasket 614 frictionally engages the inside surface of the bowl opening as shown. Removal of the cover 610 requires a little user force to break the frictional engagement between the gasket 614 and the inside surface of the bowl.

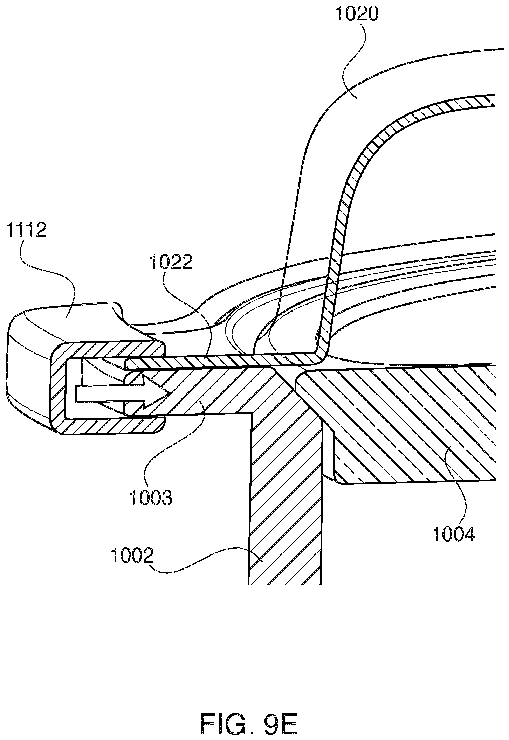

FIG. 9E shows yet another embodiment for securing the cover 1020 to the bowl 1002. As shown, the bowl 1002 has a lip 1004 and the cover has an extended base portion 1022 that are sandwiched together as shown. Once positioned together, a sliding handle 1112 is moved into position securing the sandwiched parts 1004 and 1022, thereby locking the cover 1020 to the bowl 1002.

While there have been shown, described and pointed out fundamental novel features of the present principles, it will be understood that various omissions, substitutions and changes in the form and details of the methods described and devices illustrated, and in their operation, may be made by those skilled in the art without departing from the spirit of the same. For example, it is expressly intended that all combinations of those elements and/or method steps which perform substantially the same function in substantially the same way to achieve the same results are within the scope of the present principles. Moreover, it should be recognized that structures and/or elements and/or method steps shown and/or described in connection with any disclosed form or implementation of the present principles may be incorporated in any other disclosed, described or suggested form or implementation as a general matter of design choice. It is the intention, therefore, to be limited only as indicated by the scope of the claims appended hereto.

It should also be understood that the example embodiments disclosed and taught herein are susceptible to numerous and various modifications and alternative forms. Thus, the use of a singular term, such as, but not limited to, "a" and the like, is not intended as limiting of the number of items. Furthermore, the naming conventions for the various components, functions, parameters, thresholds, and other elements used herein are provided as examples, and can be given a different name or label. The use of the term "or" is not limited to exclusive "or" but can also mean "and/or".

## Claims

1. A food preparation and serving system comprising:
a base having a predetermined geometric shape, a bottom, side walls extending upward from the bottom and an open top with a top edge; and
a combined serving board and cutting board having a geometric shape similar to that of the base and having an edge, the combined serving board and cutting board being sized so as to at least partially nest into the open top of the base such that the edge of the combined serving board and cutting board at least partially rests within the open top of the base.

2. The food preparation and serving system according to claim 1, wherein the top edge of the base includes an angled inward surface, and the edge of the combined serving board and cutting board has a similarly angled surface such that the angled inward surface of the top edge of the base receives the similarly angled surface of the combined serving and cutting board.

3. The food preparation and serving system according to claim 1, wherein the combined serving board and cutting board comprises two sides, one side being a serving side having at least one compartment for receiving a food product, and an other side being a cutting board surface.

4. The food preparation and serving system according to claim 1, further comprising a cover configured to fit onto the top edge of the base, the cover having at least one locking mechanism configured to secure the cover to the base.

5. The food preparation and serving system according to claim 4, wherein the at least one locking mechanism comprises:
at least one opening in the side wall of the base; and
a sliding handle having an upper portion configured to receive an edge of the cover, and a lower portion configured to be received into the at least one opening such that when the sliding handle is in place, the cover is rigidly connected to the base.

6. The food preparation and serving system according to claim 4, wherein the at least one locking mechanism comprises a clip configured to clip onto an edge of the cover and an edge of the base.

7. The food preparation and serving system according to claim 6, wherein the clip is pivotally attached to the cover or the edge of the base.

8. The food preparation and serving system according to claim 4, wherein the at least one locking mechanism comprises at least one magnet positioned in the top edge of the base and at least one magnet positioned in an edge of the cover that is positioned on the top edge of the base.

9. The food preparation and serving system according to claim 3, wherein the combined serving and cutting board further comprises at least one opening, recess or cutout configured to assist a user in removing the combined serving and cutting board from the at least partially nested position within the open top of the base.

10. The food preparation and serving system according to claim 4, wherein the cover is transparent.

11. The food preparation and serving system according to claim 1, wherein the base comprises a bowl.

12. A food preparation and serving system comprising:
a base bowl having a bottom, side walls extending upward from the bottom and an open top having a top edge and an inside upper circumferential edge;
a combined serving board and cutting board comprising two sides, one side being a serving side having at least one compartment for receiving a food product, and an other side being a cutting board, the combined serving board and cutting board being sized and configured to be received into the open top and rest within the inside upper circumferential edge such that one of the serving side or cutting board side is flush with the top edge of the base bowl;
a transparent cover configured to be releasably attached to the base bowl; and
a locking mechanism connected to the transparent cover and configured to selectively lock the transparent cover onto the base bowl.

13. The food preparation and serving system according to claim 12, wherein the locking mechanism comprises:
at least one opening in the side walls of the base bowl; and
a sliding handle having an upper portion configured to receive an edge of the transparent cover, and a lower portion configured to be received into the at least one opening such that when the sliding handle is in place, the transparent cover is rigidly connected to the base bowl.

14. The food preparation and serving system according to claim 12, wherein the combined serving and cutting board further comprises at least one opening, recess or cutout configured to assist a user in removing the combined serving and cutting board from a resting position within the inside upper circumferential edge when one of the serving side or cutting board side is flush with the top edge of the base bowl.
